# EUROPEAN PATENT APPLICATION

(11) **EP 4 776 018 A1**
(43) Date of publication of application: **15.07.2026**
(21) Application number: 25400001.1
(22) Date of filing: 09.01.2025
(51) Int. Cl.: G01S 7/02, G01S 7/292

(54) **METHOD FOR TRACKER-BASED IDENTIFICATION OF AGILE RADAR EMITTER TYPES**

(71) Applicant: Fraunhofer-Gesellschaft zur Förderung der angewandten Forschung e.V., 80686 München (DE)
(72) Inventor: Schlangen, Isabel, 53177 Bonn-Bad Godesberg (DE); Jovanoska, Snezhana, 53177 Bonn-Bad Godesberg (DE); Degen, Christoph, 53177 Bonn-Bad Godesberg (DE)
(74) Representative: Gagel, Roland

(57) **Abstract**

In a method for identification of agile radar emitter types a database (1) with emitter-specific transition models (2) is provided, each transition model (2) corresponding to a different known radar emitter type and being created to predict, based on a signal representation input to the model, either a next signal representation (5) which has the highest probability to follow the input signal representation in a signal sequence emitted by the corresponding radar emitter type or a probability distribution which gives different probabilities to different signal representations which might follow the input signal representation in a signal sequence emitted by the corresponding known radar emitter type of the model. After selecting several transition models (2) of the database (1) and extracting consecutive signal representations (4) from a received signal sequence (3) of a radar emitter type to be identified, one of the selected transition models (2) which best predicts the extracted signal representations (4) is iteratively determined using a likelihood function. The most likely model is extracted in a separate, independent step.

## Description

### Technical field

The present invention relates to a method for the identification of agile radar emitter types in which a received signal sequence of a radar emitter type to be identified is provided and a sequence of signal representations is extracted from the received signal sequence.

The purpose of Electronic Intelligence (ELINT) and Electromagnetic Support (ES) is to create situational awareness in the Electromagnetic Spectrum (EMS). Specifically, radar emitters need to be classified or identified based on the signal sequence they emit. Conventional radar systems operate with a restricted set of parameter configurations for different purposes, also called radar modes. Each mode has a particular configuration e.g. for the radar frequency (RF), pulse width (PW) or Pulse Repetition Frequency (PRF), which are either stable or follow a predefined pattern such as stepped, sine, jitter, etc. These parameters are specifically chosen for different radar tasks, e.g. search, track, alert-confirm or missile guidance.

Both the information about the emitter type as well as the task it is currently carrying out are of vital importance in ELINT and ES. Traditionally, radar emitters and their modes are collected in an emitter library, which collects important radar parameter configurations in tabular form. Once the ELINT/ES system receives a signal sequence, it recognises the specific parameter configuration and identifies the radar and its active mode by matching it to the entries of the emitter library.

The introduction of electronically steered arrays has allowed radar systems to become increasingly agile and capable of performing multiple tasks, meaning that parameters are no longer restricted to a small set of configurations. On the contrary, state-of-the-art systems are now able to choose from possibly thousands of parameter sets to cater to the current situation in the EMS. Furthermore, they can adapt quickly and dynamically, which leads to possibly very complex parameter patterns. In contrast to the traditional systems described above, such agile radars can no longer be adequately represented in a standard emitter library: on the one hand, such a database would become very large, and on the other hand it would be computationally cumbersome to match a specific radar with such a database. Moreover, two different agile radars could in theory use the same range of parameters but with different sequential patterns due to different resource management and scheduling algorithms within. Thus, they cannot be adequately represented in a conventional emitter library.

### Prior art

As described above, conventional radars are classified by matching parameters of received signals to entries of an emitter library. For this purpose, a suitable database needs to be created in form of a table that includes the parameters of all or at least the most common emitters of interest and each of their operational modes. The received signal sequence is analysed and features corresponding to the entries of the emitter library are extracted. The extracted features may include categorical data describing the signal pattern. The identification is consequently done by matching the feature vector to features in the emitter library. The entry which best matches the feature vector is considered as the identified mode of an emitter type. This method only works for non-agile radars because they are fully described with a small set of fixed operational modes and features.

Known methods for agile radar classification are based on end-to-end machine learning solutions, which take a given signal sequence as an input and provide a classification output in form of an emitter ID, as for example described in S. Apfeld et al., "Identification of radar emitter type with recurrent neural networks", In 2020 Sensor Signal Processing for Defence Conference (SSPD), IEEE, pp. 1 - 5. In such methods, features are extracted from the intercepted signals and represented either in image form, as symbol sequences, or in other forms before applying the neural network as a classifier.

CN 117075069 A suggests an approach for radar behaviour recognition that integrates deep learning and unsupervised models. It utilizes DBSCAN for clustering radar word sequences, which are then encoded to represent a radar behaviour. The semantic meaning is defined based on coefficients like distance and speed. The radar behaviour is recognized using deep learning based on the semantic sequences.

EP 3 674 741 A1 provides a rapid, efficient, and reliable method for identifying radar sources using deep learning techniques in complex electromagnetic environments. It employs multilayer neural networks to classify radar sources based on their pulse descriptors. Parametric or density-based clustering methods are used to group radar pulse descriptors based on their characteristics. Supervised learning identifies known emitters, while unsupervised learning helps discover new, unidentified sources. The system can handle multiple known classes and reject unknown signals while incrementally identifying new radar sources.

Such approaches have several disadvantages: They represent a black box solution, i.e. explainability is not given in general. Furthermore, for each scenario a new network needs to be trained to take all emitters of interest into account, which requires substantial resources in terms of personnel, data, and time. This also implies that there is no straightforward way to include a new emitter into a pretrained network during a running mission and a classification network needs to be trained separately for each mission.

The object of the present invention is to provide a method for identification of agile radar emitter types which allows an easy extension to new emitter types, does not require a mode library, and represents an explainable procedure.

### Summary of the invention

The object is achieved with the method according to claim 1. Advantageous embodiments of the method are subject of the dependent claims or can be derived from the following description.

In the proposed method a database with a multiplicity of emitter-specific models is provided. Each model of this database corresponds to a different known radar emitter type and is created to predict, based on a signal representation input to the model, either a next signal representation which has the highest probability to follow the input signal representation in a signal sequence emitted by the corresponding known radar emitter type of the model, or a probability distribution which gives different probabilities to different signal representations which might follow the input signal representation in a signal sequence emitted by the corresponding known radar emitter type of the model. In the present patent application, these models are referred to as transitional models since they map the transition from one or more signal representations to the next signal representation in a sequence.

A signal representation is a form of describing a radar signal or a sequence of radar signals, e.g. in the form of an image, a symbol or a vector. In the present patent application, the signal representation is preferably a symbol represented by a vector with n elements (n ≥ 2) or is only the corresponding vector. The vectors may be learned with one of the known word embedding methods based on some contextual or morphological similarity or by using neural networks such as autoencoders that build an internal representation based on information compression. For example, so-called word embeddings from natural language processing could be used, as is disclosed for example in S. Selva Birunda et al., "A review on word embedding techniques for text classification", Innovative Data Communication Technologies and Application: Proceedings of ICIDCA 2020, pp. 267-281, 2021. Another possibility is to use autoencoders which are a popular method for this purpose as disclosed for example in G. Brunner et al., "Disentangling the latent space of (variational) autoencoders for NLP", In: Advances in Computational Intelligence Systems: Contributions Presented at the 18th UK Workshop on Computational Intelligence, September 5-7, 2018, Nottingham, UK, pp. 163-168. The extraction of signal representations from a signal sequence of a radar emitter can be carried out in various ways as known in the art. A trained neural network can be used for the extraction of the signal representations.

In the following, the invention is described using the signal representation in the form of symbols. However, the corresponding description also applies to any other type of signal representation according to the present invention.

In the proposed method several transition models are selected from the database. The database should contain transition models for many different emitter types. Depending on the database, all transition models or only a smaller collection of transition models which are relevant or suitable for the given scenario in which signals from unidentified radar emitter type(s) are received, are selected. Relevant transition models are the ones whose emitter type should be identified if present in the current scenario. From the received signal sequence of a radar emitter type to be identified, in the following called received signal sequence, consecutive symbols are extracted. All transition models preferably operate on the same representation space. However, this is not mandatory. It is only necessary to ensure the compatibility of the models through the presence of a measurement function that makes the measurement comparable with the respective prediction.

The proposed method iteratively determines one of the selected transition models which best predicts the extracted symbols. In this iterative determination the extracted consecutive symbols are sequentially used, one symbol in each iteration. Each iteration step includes the prediction of the next symbol or probability distribution for next symbols with each transition model and the comparison of the predicted next symbol or probability distribution for next symbols for each transition model with the next symbol extracted from the received signal sequence.

In the case of predicting a probability distribution for next signal representations which might follow the input signal representation, the transition models preferably use the previously seen sequence of symbols to provide prediction weights for the available symbols with higher weights for the symbols which have higher likelihood to occur based on the specific model. The next extracted symbol is then compared in each iteration with the weighted representation space of each model, increasing the weights of those symbols in the current model's representation space which have higher similarity to the vector of this extracted symbol. The weights in all representation spaces of all models are then normalised across the models. The radar emitter type of the transition model whose representation space has the highest weights is then preferably output as the identified radar emitter type. Other methods for extracting the most likely radar emitter type could be used, such as the model whose representation space includes the vector with the highest overall weight.

The proposed method does not require a conventional mission data file. In contrast, it builds on emitter-specific transition models that describe the characteristic emission pattern of a radar. The type of these transition models is not of importance. This could be a simple model using a Markov chain, a trained neural network, or any other function that assigns a probability to each symbol based on how likely it will appear in succession to the previous symbols. A mapping to a single symbol may also be used, such that the probability for this symbol is 1 and the probability for all other symbols is 0. It is possible to select transition models of emitters of interest from an existing pool of transition models to tailor the method to the specific scenario. No additional training is needed for this step.

Segments of the radar emissions are represented as vectors in an n-dimensional vector space and the transition models preferably operate on the same vector space. These vectors encode structural information about the behaviour of the corresponding emitter type over time and are preferably placed in the vector space based on a given training set, e.g. using a word embedding method like fastText. The method is built, preferably under the Bayesian paradigm, predicting a next emission and updating this prior belief with the current (received) emission. This makes the method explainable in contrast to state-of-the-art neural network approaches. The method preferably propagates a weighted sum of all selected transition models during the processing of the current (received) signal sequence. Hence it identifies the most probable model over time, preferably via the model weights that are determined with the Bayesian approach. This mechanism allows easy integration of new transition models into the algorithm without the need for re-training. The only necessary input is the transition model of the newly introduced emitter.

Typically, the provision of a received signal sequence of an unidentified radar emitter type to the proposed identification method includes recording radar signals with one or several radar antennas, deinterleaving the radar signals to obtain separate signal sequences corresponding to distinct radar emitter types and providing one of these signal sequences as said received signal sequence with which the identification is carried out. Preferably the steps of iteratively determining one of the selected transition models which best predicts the extracted sequence of symbols and outputting the radar emitter type of the determined transition model as the identified radar emitter type are carried out for each of said obtained several signal sequences separately to determine all radar emitter types from which the radar signals are received.

In a preferred embodiment, the determination of one of said selected transition models which best predicts the extracted symbols includes the calculation of weighting factors for each transition model which are updated in each iteration. A higher weighting factor means that the next symbol(s) predicted by a model is/are closer to the received symbol than the next symbol(s) predicted by another model which receives a lower weighting factor. The weighting factors are normalized so that the sum of weighting factors in each iteration over all selected transition models is equal 1. Preferably the Bayesian paradigm is used for determining the best fitting model, in particular in connection with the embodiment using weighting factors.

In the case of predicting a next signal representation which has the highest probability to follow the input signal representation the transition models are preferably designed in such a way that they output the predicted next symbol together with a probability value according to which the predicted next symbol will follow the input symbol in the signal sequence emitted by the corresponding radar emitter type of the model. The determination of the transition model which best predicts the extracted sequence of symbols then also takes into account the probability values output from the transition models with each predicted next symbol.

The proposed method is specifically designed for the identification of agile radar emitters. Nevertheless, the method can also be used to identify non-agile emitters.

### Short description of the drawings

The proposed method is explained in the following by way of example in connection with the appended figures.
- Fig. 1: shows a schematic illustration of the proposed method in a preferred embodiment in form of a numeric example.
- Fig. 2: highlights the recursive structure of the proposed method and specifies inputs, outputs, and the iterative expansion of the symbol history.

### Ways for carrying out the invention

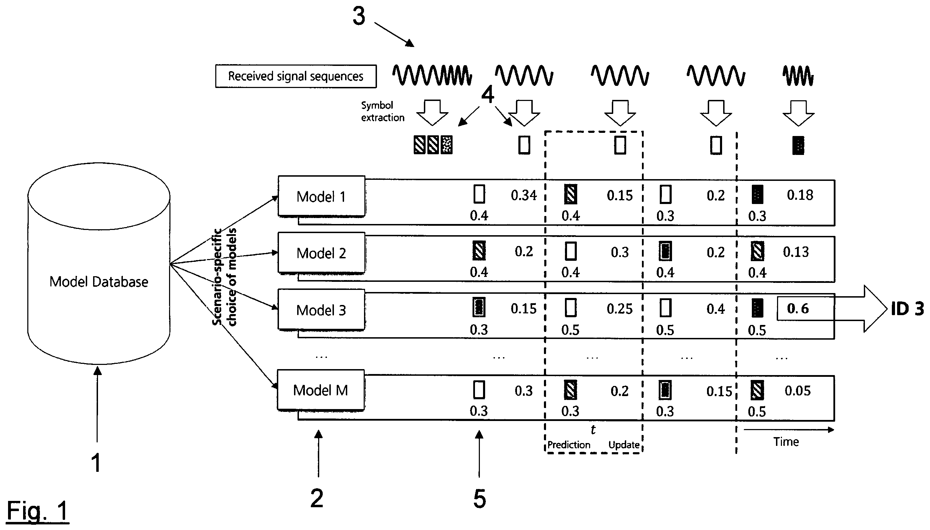

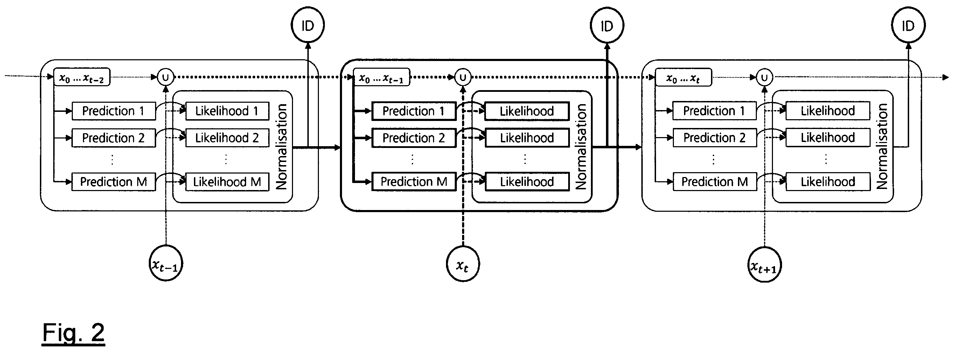

The method according to the present invention consists of several components and/or method steps that are exemplarily illustrated in Figures 1 and 2.

Dependent on the current mission or scenario, a set of *M* emitters of interest is defined, whose transition models are taken from the available model database (Fig. 1). The method builds on the assumption that the input signal comes from a single emitter, i.e. that the received signal stream is deinterleaved in advance. The input signal is translated into a sequence of vectors/symbols that the transition models can process. For example, repeated sections of a signal are extracted as a symbol which is represented by a vector with *n* elements. During operation, the input sequence is processed iteratively symbol by symbol (Fig. 2). In each iteration, every model returns a probability distribution over all possible next symbols. Dependent on the design of the model, this can be done based on the whole symbol history or simply based on the last input symbol. The prediction is based on a suitable transition model that is formed in advance (e.g. by training a neural network). The prediction step is crucial for the proposed method since it describes the specific patterns in the emissions of a radar system based on which an identification can be performed. The transition models can be defined on any representation space. However, for the following step in the procedure, it is essential that all transition models are compatible, preferably operating on the same representation space for compatibility. In this case, each transition model operates on a copy of the representation space. The weights of the symbols/vectors in the representation space change based on the prediction probabilities of each model. After the prediction, the resulting estimate is updated based on the received next symbol in the sequence. Based on the similarity between the predicted and the received next symbol a likelihood is computed and the weights of the symbols in the representation space of the model are updated. Preferably, the update of the symbol weights is done with the Bayes paradigm, i.e. the update involves a multiplication of the predicted weight with the association likelihood between the received and the predicted symbol, as well as a normalisation over the whole representation space. The association likelihood can be any function that assesses how likely the current estimated state of the emitter has caused the received symbol. For example, it could be the Euclidean distance between the vectors. This likelihood is normalised over all models, resulting in higher weights in the representation space of the most likely model. Finally, the most likely model is identified.

Figure 2 illustrates the recursive nature of the Bayesian idea. In this figure, *xₜ* denotes the vector representation of the radar signal snapshot at time t. We assume that M models were chosen from the model database for the current scenario.

At time t, the sequence *x*₀ ... *x*ₜ₋₁ of previously seen radar snapshots (in form of their representation vectors) is given to each of the model predictors, resulting in *M* model-specific predictions of the next symbol. These predictions are multiplied with the posterior beliefs of the previous step *t*-1 to integrate past knowledge of the Bayes filter. Then, a model-specific likelihood is computed from these predicted probabilities using the current signal representation vector *xₜ,* i.e. all predictions are compared with the current input and ranked according to their suitability to the measured reality. A normalisation step across all models finally makes the *M* models comparable, i.e. the model that provides the best estimate when compared to the received symbol receives the highest weight. The normalised likelihoods are the posterior beliefs at time *t* that are passed on to the next time step. For the identification of the most probable emitter type, the model with the highest weight can be chosen after each iteration of the method. Alternatively, the identification step can be done after a given time interval.

A simplified workflow of an example of the proposed method is illustrated schematically in Fig. 1. In this example a model database (1) is shown on the left-hand side from which a collection of transition models (2), Model 1 to Model M, is chosen specifically for the current mission or scenario. In the upper line of the figure, received signal sequences (3) from an unidentified radar emitter are shown exemplarily. From these signal sequences (3), units of meaning are extracted in form of symbols (4) with accompanying n-dimensional vectors that the transition models (2) can process. These symbols (4) are indicated as rectangular boxes in the figure. The extracted symbols (4) are sequentially processed by all transition models (2) (Model 1 ... Model M) predicting the next symbol (5) together with the probability of symbol occurrence. The models can output multiple symbols with probabilities of occurrence, however only the most probable one is depicted in the figure with a probability of occurrence less than 1 under the symbol, indicating that other symbols might also be possible for the model, however with lower probability. The predictions of each model are matched against the received next symbol (4) of the received signal sequence (3). In Fig. 1, the predicted symbols of each model (2) are displayed sequentially in the model row. Based on the match or mismatch of the predicted next symbol (5) and received next symbol (4) a probability in form of a weighting factor is computed which accesses the fit between the models' predictions and the measurement while taking into consideration the probability of occurrence provided by the transition model for the next predicted symbol. In the first iteration shown in Fig. 1, for example, the predicted next symbols (5) of Model 1 and Model M match the received next symbol (4). The predicted next symbol (5) of Model 2 and Model 3 do not match the next symbol, thus the probability or weighting factor in this iteration is higher for Model 1 and Model M than for Model 2 and Model 3. The higher weighting factor of Model 1 in comparison with Model M is because the output probability value of Model 1 is higher than that of Model M. The model weights after the update step (i.e. matching of model predictions with the received next symbol in a Bayesian manner) are normalized and should sum to 1. In this figure their sum is less than 1 since the dots (...) indicate that more than 4 models may have been selected. In the next iteration, the corresponding weighting factors are updated based on the further predicted next symbols, and so on. As is typical in the Bayesian paradigm, the weights of the models in each iteration are influenced by the model weight from the previous iteration as well as the prediction weight. Based on these probabilities or weighting factors, the most likely model can be extracted, for example, at the end of each iteration or after a specific number of iterations. In the last iteration of Fig. 1, Model 1 and Model 3 both predict the correct next symbol, so their weights are higher than those of the remaining models. Still, Model 3 receives a much higher weight based on the previous estimations. The higher weight for Model 3 is due to the higher prediction probabilities of the model for the correct symbol, i.e. in step 3 and 4 both models predict the correct symbol, however Model 3 has a prediction probability of 0.5 in both steps and Model 1 has 0.3 in both steps. Another factor which is at play here is that in step 2 Model 1 gets high penalty for predicting the wrong symbol with high probability. This shows how the model weights are influenced by the performance of each model over time on the specific input data. In this example the method outputs the radar emitter type of Model 3 (indicated with ID 3) as the identified radar emitter type.

The proposed inventive method offers an effective, modular, and explainable solution for agile radar emitter type identification. It can distinguish highly agile emission patterns with a possibly extensive overlap, based only on the behavioural patterns of an emitter. An important advantage to conventional emitter identification is that the method does not require a mode library. Furthermore, each emitter-specific transition model only needs to be defined once and can then be selected on demand, hence avoiding the need for cumbersome retraining of a mission-specific classifier. Instead of requiring a very large mode library, the method encodes information about the known radar emitters in high-dimensional vector representations of the emitted signals on the one hand and in the emitter-specific transition models on the other.

Another great advantage of the proposed method is its modularity: It is very straightforward to compile any combination of emitters of interest as long as a transition model is given for each of them. Moreover, if a more recent transition model for a given emitter becomes available, it is straightforward to replace the old transition model. The type of transition model is unimportant, i.e. it is perfectly possible to combine models based on neural network predictors with models based on Markov chains etc. Also, any suitable signal representation can be chosen as long as all transition models are compatible in the sense that the measurement is comparable with the respective prediction.

## Claims

1. A method for identification of agile radar emitter types comprising at least the following steps:
- providing a database (1) with a multiplicity of emitter-specific transition models,
-- each transition model corresponding to a different known radar emitter type and being created to predict, based on a signal representation input to the model, either a next signal representation which has the highest probability to follow the input signal representation in a signal sequence emitted by the corresponding radar emitter type or a probability distribution which gives different probabilities to different signal representations which might follow the input signal representation in a signal sequence emitted by the corresponding known radar emitter type of the model,
- selecting several transition models (2) of said database,
- extracting consecutive signal representations (4) from a received signal sequence (3) of a radar emitter type to be identified,
- iteratively determining one of said selected transition models (2) which best predicts the extracted signal representations (4), wherein each iteration step includes
-- predicting the next signal representation (5) or probability distribution for next signal representations (5) with each transition model (2) based on an input signal representation (4) extracted from the received signal sequence (3), and
-- comparing the predicted next signal representation (5) or probability distribution for next signal representations (5) for each transition model (2) with the next signal representation (4) extracted from the received signal sequence (3), and
- outputting the radar emitter type of the determined transition model (2) as the identified radar emitter type.

2. The method of claim 1,
**characterized in that**
the step of extracting consecutive signal representations (4) from a received signal sequence (3) of a radar emitter type to be identified includes receiving radar signals with one or several radar antennas, deinterleaving the radar signals to obtain several signal sequences corresponding to several radar emitter types and providing one of these signal sequences as said received signal sequence (3).

3. The method of claim 2,
**characterized in that**
the steps of
- iteratively determining one of said selected transition models (2) which best predicts the extracted sequence of signal representations (4) and
- outputting the radar emitter type of the determined transition model (2) as the identified radar emitter type are carried out separately for each of said obtained several signal sequences.

4. The method of one or several of claims 1 to 3,
**characterized in that**
the determination of one of said selected transition models (2) which best predicts the extracted signal representations (4) includes the calculation of weighting factors for each transition model (2) which are updated and normalized across all transition models (2) in each iteration, wherein the transition model (2) having the highest weighting factor after finishing the iterations is determined as the transition model (2) which best predicts the extracted signal representations (4).

5. The method of one or several of claims 1 to 4,
**characterized in that**
the step of iteratively determining one of said selected transition models (2) which best predicts the extracted signal representations (4) uses the Bayesian paradigm for determining the best fitting transition model (2).

6. The method of one or several of claims 1 to 5,
**characterized in that**
in case of predicting a probability distribution for next signal representations (5) which might follow the input signal representation, the determination of one of said selected transition models (2) which best predicts the extracted signal representations (4) takes into account the probability values of the probability distribution for the next signal representations (5) output from the transition models (2).

7. The method of one or several of claims 1 to 5,
**characterized in that**
in case of predicting a next signal representation (5) which has the highest probability to follow the input signal representation the transition models (2) are designed to output the next signal representation (5) together with a probability value according to which the predicted next signal representation (5) will follow the input signal representation (4) in a signal sequence emitted by the corresponding radar emitter type, and the determination of one of said selected transition models (2) which best predicts the extracted signal representations (4) also takes into account the probability values output from the transition models (2) with each predicted next signal representation (5).

8. The method of one or several of claims 1 to 7,
**characterized in that**
the signal representations (4) are based on word embedding techniques in analogy to natural language processing.
